# EUROPEAN PATENT SPECIFICATION

(11) **EP 0 399 689 B1**
(45) Date of publication and mention of the grant of the patent: **19.04.1995**
(21) Application number: 90304919.5
(22) Date of filing: 08.05.1990
(51) Int. Cl.: G11B 11/10, G11B 13/04

(54) **Magneto-optical disc recording apparatus**
Aufzeichnungsgerät für magnetooptische Platten
Appareil d'enregistrement avec disque magnéto-optique

(30) Priority: 23.05.1989 JP 130679/89
(43) Date of publication of application: 28.11.1990
(73) Proprietor: SONY CORPORATION, Tokyo 141 (JP)
(72) Inventor: Ohmori, Takashi, c/o Patents Division, Shinagawa-ku, Tokyo 141 (JP); Fujisawa, Hirotoshi, c/o Patents Division, Shinagawa-ku, Tokyo 141 (JP)
(74) Representative: Purvis, William Michael Cameron

(56) References cited:
- GB-A- 2 181 879
- PATENT ABSTRACTS OF JAPAN, unexamined applications, P field, vol. 12, no. 123,April 16, 1988 THE PATENT OFFICE JAPANESE GOVERNMENT page 151 P 690
- PATENT ABSTRACTS OF JAPAN, unexamined applications, P field, vol. 12, no. 259,July 21, 1988 THE PATENT OFFICE JAPANESE GOVERNMENT page 70 P 733

## Description

The invention relates to magneto-optical disc recording apparatus.

In previously proposed magneto-optical disc recording apparatus a light beam emitted from a laser light source is irradiated intermittently to a recording film of a magneto-optical disc and a magnetic head is driven while being supplied with a modulated signal based on the information to be recorded, whereby the temperature of the recording film on the magneto-optical disc is locally raised with application of a modulated magnetic field, whose polarity is inverted in conformity with the information, from the magnetic head to the recording film on the magneto-optical disc, so that the perpendicular magnetized film is oriented by the polarity of such modulated magnetic field of the magnetic head and the information is recorded on the magneto-optical disc.

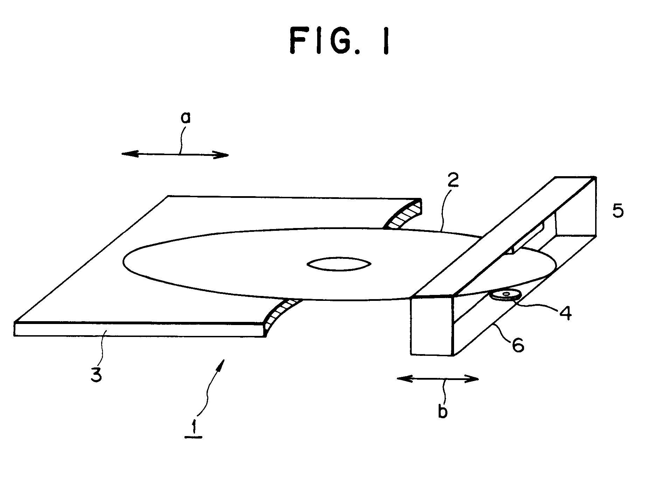

Referring to Figure 1 of the accompanying drawings, in magneto-optical disc recording apparatus 1, a magneto-optical disc 2 is placed on a tray 3 as shown in Figure 1. The tray 3 is movable between a first position outside an opening in a case (not shown) of the apparatus, i.e. a position where the magneto-optical disc is replaceable, and a second position within the opening in the apparatus case 1, i.e. a position where a recording or reproducing operation can be performed on the magneto-optical disc by an optical head and a magnetic head which will be described later. The tray 3 is moved as indicated by arrow a so that the magneto-optical disc 2 can be loaded into or ejected from the apparatus.

An optical head 4 and a magnetic head 5 are held by a holding member 6 in such a manner as to be retained opposite to each other with the magneto-optical disc 2 interposed therebetween.

The holding member 6 is movable in the radial direction of the magneto-optical disc 2 as indicated by arrow b, and both the optical head 4 and the magnetic head 5 can be shifted to a desired recording track on the magneto-optical disc when the holding member 6 is moved in the direction of the arrow b by shifting means (not shown).

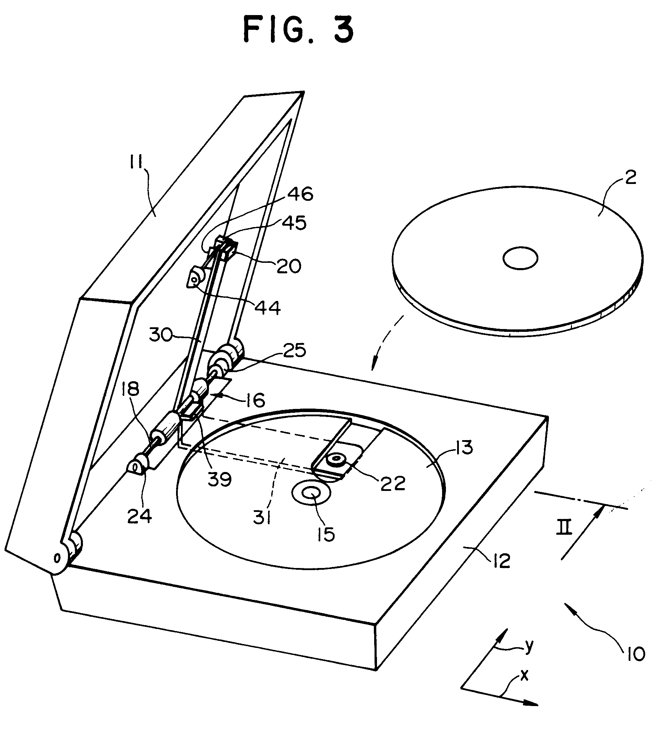

The magnetic head 5 used in such magneto-optical disc recording/reproducing apparatus comprises a cylindrical core 8 which is sectionally of E-shape and a coil 9 wound around a centre core element 8A of the core 8 with a predetermined number of turns, as illustrated in Figure 2.

Therefore, when a driving current is fed to the coil 9 in accordance with the information to be recorded, a modulated magnetic field symmetrical with respect to the central axis of the centre core element 8A is generated between the centre core element 8A and a side core element 8B, so that the desired information can be recorded on the magneto-optical disc 2, more specifically in the recording film on the magneto-optical disc 2, with application of such modulated magnetic field thereto by the magnetic head 5 simultaneously with irradiation of the light beam performed by the optical head 4 from the reverse side with respect to the magnetic field.

Dimensionally reducing such magneto-optical disc recording apparatus to obtain a compact structure which can easily be carried, allows connection to any of various information processors in compliance with individual requirements.

For achieving such purpose, however, it is necessary to simplify the mechanism for moving the tray 3 and to realize a still more compact structure of the magneto-optical disc recording apparatus as a whole.

Patent Specification GB-A-2 181 879 discloses magneto-optical recording apparatus wherein a magnetic head comprises an E-shaped magnetic member with a coil wound around a middle arm of the magnetic member.

According to the invention, there is provided a magneto-optical disc recording apparatus comprising an optical head shiftable in a diametrical direction of a magneto-optical disc and capable of irradiating a light beam onto the magneto-optical disc, and a magnetic head disposed to be mutually opposite to the optical head, with the magneto-optical disc interposed therebetween, to apply a magnetic field to the magneto-optical disc while being shifted in the diametrical direction of the magneto-optical disc, the magnetic head comprising an E-shaped core and a coil wound around a centre core element thereof,
characterised in that the magnetic head is so formed that the sectional length of the centre core element in one direction extending toward two side core elements is equal to or shorter than the sectional length in the direction orthogonal thereto, and the magnetic head is so disposed that the orthogonal direction is coincident with the diametrical direction of the magneto-optical disc, whereby the intensity of the magnetic field generated by the magnetic head reduces more gradually in the diametrical direction of the magneto-optical disc than in said one direction.

Thus, it becomes possible to expand the applicable range of a modulated magnetic field with respect to the orthogonal direction. Therefore, if the core is so positioned that the orthogonal direction coincides with the diametrical direction of the magneto-optical disc, the mechanism for holding the magnetic head can be simplified.

The invention is diagrammatically illustrated by way of example in the accompanying drawings, in which:-
Figure 1 is a perspective view of magneto-optical disc apparatus of previously proposed kind;
Figure 2 is a perspective view of a magnetic head employed in the apparatus of Figure 1;
Figure 3 is a perspective view of one example of magneto-optical disc recording apparatus according to the invention;
Figure 4 is a sectional view showing details of the apparatus of Figure 3;
Figure 5 is a perspective view of a magnetic head for the apparatus of Figures 3 and 4;
Figures 6 and 7 graphically show characteristic curves representing the operation of the magnetic head of Figure 5; and
Figure 8 is a perspective view of a second example of magneto-optical disc recording apparatus according to the invention.

Referring to the drawings and firstly to Figure 3, magneto-optical disc recording apparatus 10 has a cover 11 which can be manually opened or closed so as to load or replace a magneto-optical disc 2.

In the magneto-optical disc recording apparatus 10, a circular recess 13 for loading a magneto-optical disc is formed at the centre of the upper surface of an apparatus body 12, and a rotary spindle 15 of a spindle motor projects upwardly from the middle of the floor of the recess 13. As is usual in optical disc recording and/or reproducing apparatus, the spindle 15 is furnished with a disc table for centring an optical disc or a magneto-optical disc, and in practice the disc is placed on the disc table. In this case, the disc table projects through the floor of the recess 13 so as to prevent contact of the magneto-optical disc with the floor of the recess 13.

Therefore, when a magneto-optical disc 2 loaded in the recess 13 is placed on a disc table (not shown) supported by the spindle 15, the disc 2 can be rotated together with rotation of the disc table driven by the spindle motor.

For the purpose of preventing the magneto-optical disc from slipping off the disc table during rotation, a holding mechanism may be disposed at the centre of the disc table to hold the central portion of the magneto-optical disc, or a grip member may be disposed within the cover 11 to grip the magneto-optical disc in a manner so as to be rotatable together with the disc table.

Hinge means is provided in a rear portion on the upper surface of the apparatus body 12 so as to hold the cover 11 by two lateral edges swingably to the apparatus body 12, whereby the cover 11 can be swung to open or close the recess 13.

An opening 16 is formed in a rear portion on the upper surface of the apparatus body 12, and a magnetic head 20 and an optical head 22 are mutually interlocked via a shaft 18 positioned above the opening 16.

At the two lateral edges of the opening 16, there are formed bearings 24 and 25 which project from the upper surface of the apparatus body 12, and the two ends of the shaft 18 are held by the bearings 24 and 25.

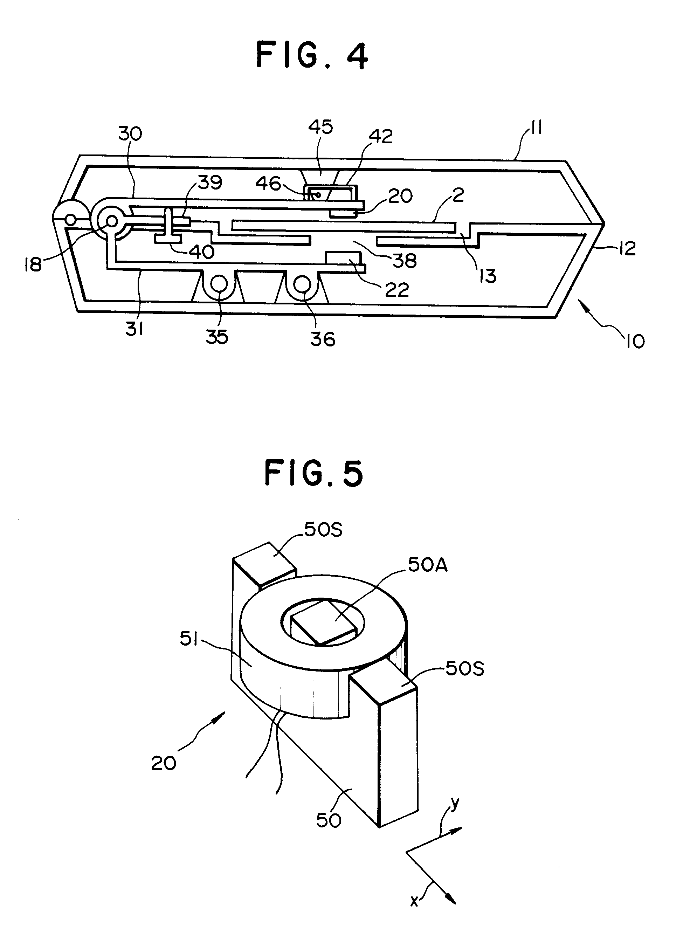

As illustrated in Figure 4, a magnetic head support member 30 is pivotally retained by the shaft 18 in a manner to be shiftable in the diametrical direction of the magneto-optical disc or the axial direction of the shaft 18. The magnetic head support member 30 is further rendered swingable toward or away from one surface of the magneto-optical disc on the reverse side with respect to irradiation of the light beam from the optical head. That is, the shaft 18 functions as a hinge pin of a hinge mechanism for swinging the magnetic head support member 30 and also as a guide pin for the magnetic head support member 30.

Furthermore, an optical head support member 31 is attached to the shaft 18 on each side of the magnetic head support member 30, so that the magnetic head support member 30 is actuated by a driving force applied to the optical head support member 31 and is thereby shifted along the shaft 18 in the diametrical direction of the magneto-optical disc through its connection to the optical head support member 31.

The optical head support member 31 thus retained by the shaft 18 shiftably thereto is also retained pivotally to be shiftable in the diametrical direction of the magneto-optical disc by guide shafts 35 and 36 disposed in the apparatus body 12 in parallel with the shaft 18, and is driven by feed means such as a linear actuator (not shown) so as to be shifted along the guide shafts 35 and 36.

The magnetic head support member 30 and the optical head support member 31 are mutually connected via the shaft 18 as mentioned, so that when the optical head support member 31 is shifted along the shaft 18 and the guide shafts 35, 36 by the feed means, the magnetic head support member 30 is also shifted in accordance therewith in the diametrical direction of the magneto-optical disc.

The optical head 22 is mounted on the fore end of the optical head support member 31 and is so set as to be capable of focusing, through an objective lens disposed in the optical head 22, a light beam emitted from a laser light source in the optical head 22 and then irradiating such light beam through a slit 38, which is formed in the recess 13 of the apparatus body 12, to a magneto-optical disc 2 loaded into the apparatus body 12.

By shifting the optical head support member 31, the light beam from the optical head 22 shifted along the guide shafts 35, 36 by the feed means can be positionally displaced in the diametrical direction of the magneto-optical disc 2, so that the light beam can irradiate a desired recording track on the magneto-optical disc 2.

The optical head support member 31 has a plate-shaped projection 39 in the proximity of the bearing portion of the shaft 18, and a screw 40 is inserted into the projection 39. The amount of swing of the magnetic head support member 30 can be changed by adjusting the length of protrusion of such screw 40.

The magnetic head 20 is disposed at the fore end of the magnetic head support member 10 in a manner to be opposed to the optical head 22.

Thus, since the amount of swing of the magnetic head support member 30 is changeable by adjusting the length of protrusion of the screw 40, the distance between the magneto-optical disc 2 and the magnetic head 20 can be adjusted by a simple operation.

A U-shaped lock member 42 is attached to the fore end of the magnetic head support member 30 on the opposite side thereof to the magnetic head 20, whereby the magnetic head support member 30 can be swung in accordance with the action of opening or closing the cover 11.

In the cover 11, there are formed bearings 44 and 45 projecting inward, and a shaft 46 is disposed between the two bearings 44 and 45.

The shaft 46 is supported substantially in parallel with the shaft 18 while extending through a rectangular space defined by the magnetic head support member 30 and the lock member 42.

Therefore, when the cover 11 is opened, the lock member 42 is lifted up by the shaft 46, so that the magnetic head 20 is moved away from the apparatus body 12 in accordance with the suing of the cover 11.

Thus, the magnetic head 20 is shifted simply by manually opening or closing the cover 11.

As a result, it becomes possible easily to load or to eject a magneto-optical disc 2 without the necessity of a driving mechanism including a tray and so forth, hence achieving a dimensional reduction and a simplified structure in the magneto-optical disc apparatus 10.

Since the magnetic head support member 30 and the optical head support member 31 are thus connected to each other through the shaft 18 so as to be held in an interlocking manner, it is unavoidable that a positional change of the magnetic head 20 to the optical head 22 is induced by each action of opening or closing the cover 11.

On the magneto-optical disc 2, therefore, a positional change occurs in the application of the modulated magnetic field as compared with the light beam irradiating position corresponding to the above described positional change of the magnetic head 20, whereby the intensity of the modulated magnetic field is also varied.

Accordingly, if the conventional magnetic head 5 (shown in Figure 2) is used in such a case, it may become difficult to attain a desired field intensity resulting in a failure in recording the information with certainty.

In an attempt to solve this problem, there may be contrived a means of dimensionally enlarging the magnetic head to expand the magnetic field applicable range. However, since the inductance of the magnetic head increases substantially in proportion to the square of the cubic measure thereof, a required magnetic head driving circuit is rendered intricate correspondingly to the enlarged dimensions of the magnetic head, thereby increasing the power consumption eventually to make practical employment of such a magnetic head impossible in the small-sized magneto-optical disc recording apparatus 10.

In view of such disadvantage, the magnetic head 20 is formed as illustrated in Figure 5, so as to expand the magnetic field applicable range in comparison with the known structure.

In the magnetic head 20, a magnetic circuit is formed by a vertically sectionally E-shaped core 50, a centre core element 50A of which is square in horizontal section and has a cylindrical coil 51 wound therearound.

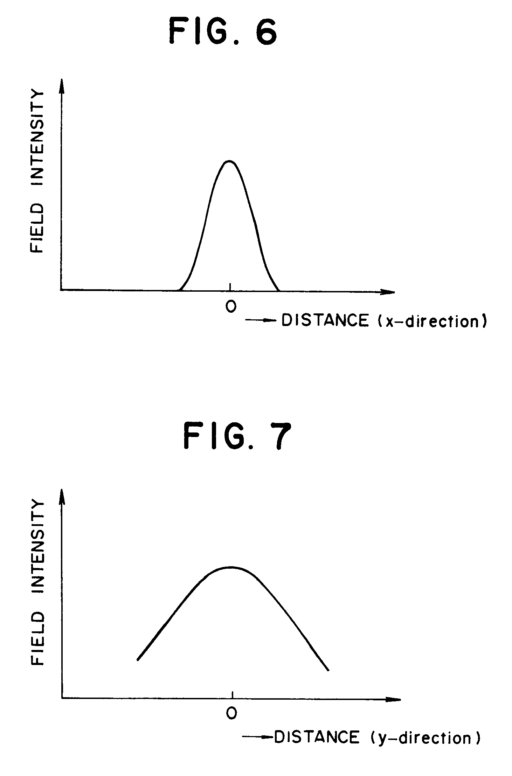

In this embodiment where a magnetic circuit is formed by the vertically sectionally E-shaped core 50 including the square section core element 50A, the intensity of the modulated magnetic field sharply decreases, as graphically shown in Figure 6, in accordance with a recession from the centre core element 50A (denoted by 0) toward two side core elements 50S (i.e. in an x-direction).

Meanwhile in a y-direction which is orthogonal to the x-direction, the intensity of the modulated magnetic field only gently decreases as graphically shown in Figure 7, so that the operable range of the magnetic field is expanded by 20 to 30 percent as compared with the conventional magnetic head (shown in Figure 2) where a magnetic field is formed which is symmetrical with respect to the axis of the centre core element 8A.

In operation the magnetic head 20 is so disposed that the y-direction is coincident with the radial direction of the magneto-optical disc 2 (i.e., the direction in which the magnetic head 20 and the optical head 22 are shiftable), whereby desired information can be recorded with certainty despite positional changes of the magnetic head 20 that may be induced by each action of opening or closing the cover 11.

Consequently an increase of the power consumption can be effectively averted to realize a compact magneto-optical disc recording apparatus 10.

Due to the above-described constitution where a magnetic circuit of the magnetic head 20 is formed by the E-shaped core 50 including the horizontally square section centre core element 50A, the applicable range of the modulated magnetic field can be expanded as compared with previously proposed constructions.

Therefore, desired information can be recorded with certainty even in a modified constitution where the magnetic head 20 is held to be swingable in accordance with the action of opening or closing the cover 11 and is shifted interlockingly with the optical head 22 through the shaft 18. Thus a small-sized magneto-optical disc recording apparatus 10 can be realized in a simplified structure where the cover 11 is manually openable and closable.

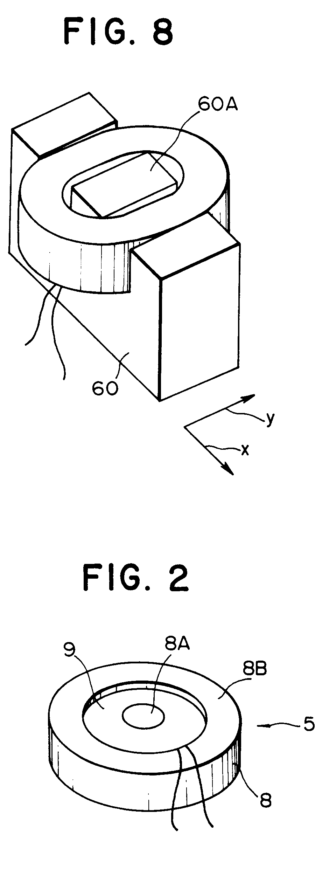

The illustrated embodiment mentioned shows a magnetic circuit of the magnetic head 20 formed by the E-shaped core 50 including the horizontally square section centre core element 50A. However, other embodiments are possible within the scope of the appended claims, for example the magnetic head may be modified as illustrated in Figure 8, wherein a magnetic circuit is formed by the use of an E-shaped core 60 with a horizontally rectangular section centre core element 60A in which the length in the y-direction is longer than the length in the x-direction.

In this modified structure, the applicable range of the modulated magnetic field can be expanded in the y-direction by an amount corresponding to the increased y-direction length of the centre core element 60A.

The horizontal sectional shape of the centre core element is not limited to a square or a rectangle alone, and the requisite thereof resides in that the horizontal sectional length of the centre core element in one direction is equal to or longer than the length in another orthogonal direction extending from the centre core element toward the two side core elements. For example, there may be used such an E-shaped core where the horizontal sectional shape of its centre core element is circular or elliptical.

In the above embodiment, the coil 51 wound around the centre core element 50A is cylindrical. However, the coil 51 could be of other shapes, for example it could be any suitable tubular shape, for example with a square or rectangular horizontal section.

Although the cylindrical coil 51 is shown wound directly around the centre core element 50A in the above embodiment, it could equally be wound around a bobbin disposed on the centre core element.

Furthermore, in the magneto-optical disc recording apparatus of the above embodiment, a magneto-optical disc 2 is loaded or ejected by manually opening or closing the cover 11. The invention is however equally applicable to a disc apparatus of other type where a magneto-optical disc is loaded or ejected by other means, for example by moving a tray.

## Claims

1. Magneto-optical disc recording apparatus (10) comprising an optical head (22) shiftable in a diametrical direction of a magneto-optical disc and capable of irradiating a light beam onto the magneto-optical disc (2), and a magnetic head (20) disposed to be mutually opposite to the optical head (22), with the magneto-optical disc (2) interposed therebetween, to apply a magnetic field to the magneto-optical disc (2) while being shifted in the diametrical direction of the magneto-optical disc (2), the magnetic head (2) comprising an E-shaped core (50, 60) and a coil (51) wound around a centre core element (50A, 60A) thereof,
characterised in that the magnetic head (20) is so formed that the sectional length of the centre core (50A) element in one direction (x) extending toward two side core elements (50S) is equal to or shorter than the sectional length in the direction (y) orthogonal thereto, and the magnetic head (20) is so disposed that the orthogonal direction (y) is coincident with the diametrical direction of the magneto-optical disc, whereby the intensity of the magnetic field generated by the magnetic head (20) reduces more gradually in the diametrical direction (y) of the magneto-optical disc than in said one direction (x).

## Patentansprüche

1. Magneto-optische Plattenaufzeichnungsvorrichtung (10) aufweisend einen optischen Kopf (22), der in einer Durchmesserichtung einer magneto-optischen Platte verschiebbar ist und einen Lichtstrahl auf die magneto-optische Platte (2) strahlen kann, und einen Magnetkopf (20), der gegenüber dem optischen Kopf (22) vorgesehen ist, wobei sich die magneto-optische Platte (2) zwischen ihnen befindet, um ein Magnetfeld auf die magneto-optische Platte (2) auszuüben, während er in der Durchmesserrichtung der magneto-optischen Platte (2) verschoben wird, wobei der Magnetkopf (2) einen E-förmigen Kern (50,60) aufweist und eine Spule (51) um ein Mittenkernelement (50A,60A) von ihm gewickelt ist,
dadurch **gekennzeichnet**,
daß der Magnetkopf (20) so gebildet ist, daß die Querschnittslänge des Mittenkernelements (50A) in einer Richtung (x), die sich in Richtung von zwei Seitenkernelementen (50S) erstreckt, gleich oder kürzer ist als die Querschnittslänge in der dazu senkrechten Richtung (y), und der Magnetkopf (20) so angeordnet ist, daß die senkrechte Richtung (y) mit der Durchmesserrichtung der magneto-optischen Platte zusammenfällt, wobei die Intensität des durch den Magnetkopf (20) erzeugten Magnetfelds sich sanfter in der Umfangsrichtung (y) der magneto-optischen Platte abschwächt als in der einen Richtung (x).

## Revendications

1. Appareil d'enregistrement sur disque magnéto-optique (10) comprenant une tête optique (22) pouvant se déplacer dans une direction diamétrale d'un disque magnéto-optique et capable de projeter un faisceau lumineux sur le disque magnéto-optique (2), et une tête magnétique (20) disposée de manière à être mutuellement en face de la tête optique (22), le disque magnéto-optique (2) étant interposé entre elles, pour appliquer un champ magnétique au disque magnéto-optique (2) tout en se déplaçant dans la direction diamétrale du disque magnéto-optique (2), la tête magnétique (20) comprenant un noyau en forme de E (50, 60) et une bobine (51) enroulée autour d'un élément de noyau central (50A, 60A) de celui-ci ;
caractérisé en ce que la tête magnétique (20) est formée de telle façon que la longueur en coupe de l'élément de noyau central (50A) dans une première direction (x) s'étendant vers les deux éléments de noyaux latéraux (50S) soit égale ou inférieure à la longueur en coupe dans la direction (y) qui lui est orthogonale, et en ce que la tête magnétique (20) est disposée de telle façon que la direction orthogonale (y) coïncide avec la direction diamétrale du disque magnéto-optique, ce par quoi l'intensité du champ magnétique produit par la tête magnétique (20) diminue plus graduellement dans la direction diamétrale (y) du disque magnéto-optique que dans ladite première direction (x).
